# EUROPÄISCHE PATENTANMELDUNG

(11) **EP 1 854 661 A2**
(43) Veröffentlichungstag der Anmeldung: **14.11.2007**
(21) Anmeldenummer: 07004972.1
(22) Anmeldetag: 10.03.2007
(51) Int. Cl.: B60P 1/02

(54) **Kraftfahrzeug**

(30) Priorität: 09.05.2006 DE 202006007370 U
(71) Anmelder: Ruthmann GmbH & Co. KG, 48712 Gescher-Hochmoor (DE)
(72) Erfinder: Winkelmann, Heinrich, 59227 Ahlen (DE)
(74) Vertreter: Meinke, Dabringhaus und Partner GbR

(57) **Zusammenfassung**

Ein Kraftfahrzeug mit angetriebenen Vorderrädern und nicht angetriebenen Hinterrädern sowie mit einem rückwärtigen Laderaum mit kastenförmigem Karosserieaufbau auf der Fahrzeugbodengruppe soll so geschaffen werden, dass es auf herstellungstechnisch möglichst einfache Weise ohne zusätzliche Einrichtungen be- und entladen werden kann.

Dies wird dadurch erreicht, dass die Bodengruppe (5) im Bereich des Laderaumes mit einer nach hinten offenen Ausnehmung versehen ist, wobei die Bodengruppe (5) entlang der Ausnehmung mit einem nach hinten offenen Rahmen (6) verstärkt ist, in welchem ein vertikal verfahrbarer Hubboden (7) gelagert ist.

## Beschreibung

Die Erfindung betrifft ein Kraftfahrzeug mit angetriebenen Vorderrädern und nicht angetriebenen Hinterrädern sowie mit einem rückwärtigen Laderaum mit kastenförmigem Karosserieaufbau auf der Fahrzeugbodengruppe.

Derartige Kleintransporter, die auch als Kastenwagen bezeichnet werden, sind vielfältig im Einsatz und zum Transport von unterschiedlichstem Transportgut geeignet. Diese Fahrzeuge sind jedoch zur Be- und Entladung mit bzw. von schweren Gütern relativ schlecht geeignet, da die Ladefläche mit Ladekante oberhalb des Fahrbahnniveaus angeordnet ist und es deshalb eines Anhebens des Transportgutes bedarf. Hierzu sind Hilfseinrichtungen, wie Rampen, Hubwagen oder dgl., notwendig.

Alternativ gibt es größere Kraftfahrzeuge dieser Art, welche eine Hebebühne aufweisen, was aber den Aufwand für ein solches Fahrzeug vergrößert und insbesondere bei kleineren Kastenwagen nicht wirtschaftlich oder aus Platzgründen nicht möglich ist. Es sind deshalb seit langem Spezialfahrzeuge z.B. der Anmelderin bekannt, bei denen es sich um sogenannte Niederflurhubwagen handelt. Diese Fahrzeuge bestehen im Prinzip aus zwei getrennten Baueinheiten, nämlich einem vorderen Serienfahrzeugteil, das als Zugmaschine oder Triebkopf dient, und einem hinteren Fahrzeugteil, das separat gefertigt wird und einen vertikal in der Höhe verfahrbaren Hubboden im Laderaum aufweist, der es ermöglicht, den Hubboden bis auf das Bodenniveau abzusenken und das Transportgut ohne Anheben in den Laderaum zu verfrachten. Bei der Herstellung solcher Spezialfahrzeuge ist es also erforderlich, das hintere Fahrzeugteil mit dem Hubboden separat zu fertigen und anschließend mit dem vorderen Fahrzeugteil zu verbinden.

Diese Art der Herstellung ist aufwändig und insbesondere für kleinere Transportfahrzeuge nicht sehr wirtschaftlich.

Aus DE 299 06 239 U1 ist ein Nutzfahrzeug für den Behältertransport bekannt. Dieses Nutzfahrzeug mit einem Triebkopf und einem U-förmigen Rahmen weist am Rahmen hydraulisch verstellbare Tragbalken auf, mittels derer man Behälter anheben und absenken kann, die auf diese Weise aufgenommen werden können. Ein Kastenwagen mit einem rückwärtigen Laderaum ist in dieser Druckschrift jedoch nicht offenbart.

Aus EP 0 198 042 B1 ist ein Einachsanhänger für einen PKW bekannt, dessen Bodeneinheit heb- und senkbar ist.

Aufgabe der Erfindung ist es, ein Kraftfahrzeug der eingangs bezeichneten Art zu schaffen, welches auf herstellungstechnisch möglichst einfache Weise ohne zusätzliche Einrichtungen be- und entladen werden kann.

Diese Aufgabe wird bei einem Kraftfahrzeug der eingangs bezeichneten Art erfindungsgemäß dadurch gelöst, dass die Bodengruppe im Bereich des Laderaumes mit einer nach hinten offenen Ausnehmung versehen ist, wobei die Bodengruppe entlang der Ausnehmung mit einem nach hinten offenen Rahmen verstärkt ist, in welchem ein vertikal verfahrbarer Hubboden gelagert ist.

Auf diese Weise ist es möglich, Serienfahrzeuge beliebiger Hersteller und Größe zu verwenden, indem in die Bodengruppe des Serienfahrzeuges eine entsprechende Ausnehmung eingebracht wird, wobei anschließend die verbleibende Bodengruppe mit einem Rahmen verstärkt wird, in dem ein vertikal verstellbarer Hubboden gelagert ist. Es bedarf somit keiner eigenständigen Fertigung eines hinteren Fahrzeugteiles, welches anschließend mit einem vorderen Fahrzeugteil (Triebkopf) verbunden werden müsste, vielmehr ist nur eine Umrüstung eines vorhandenen Serienfahrzeuges notwendig. Damit können auf kostengünstige Weise alle am Markt befindlichen Kastenwagen verwendet und entsprechend umgebaut werden. Dabei ist eine Anpassung an unterschiedlichste Anforderungen im Hinblick auf geometrische Abmessungen und Nutzlast möglich.

In Ausgestaltung ist vorgesehen, dass die Hinterräder einzeln am Rahmen oder an der Bodengruppe aufgehängt sind. Weist das umzurüstende Serienkastenfahrzeug eine durchgehende Hinterachse auf, so muss diese selbstverständlich entsprechend durch eine Einzelradaufhängung ersetzt werden, um die Hubbewegung des Hubbodens zu ermöglichen.

In vorteilhafter Ausgestaltung ist vorgesehen, dass der Hubboden wenigstens in angehobener Transportposition am Rahmen verriegelbar ausgebildet ist. Damit ist zuverlässig sichergestellt, dass der Hubboden während der Fahrt nicht ungewollt seine Höhenlage verändern kann.

Grundsätzlich kann die vertikale Verfahrbarkeit des Hubbodens unterschiedlich realisiert sein, besonders bevorzugt ist vorgesehen, dass der Hubboden hydraulisch verstellbar ausgebildet ist.

Bei dieser Gestaltung sind bevorzugt im Bereich aller vier Ecken des rechteckigen Hubbodens hydraulische Stellzylinder angeordnet.

Bei Verwendung solcher baugleicher hydraulischer Stellzylinder sind diese ganz besonders bevorzugt in Reihe geschaltet, wodurch in besonders einfacher Weise eine synchrone Hubbewegung in allen Stellzylindern realisiert wird.

Die Erfindung ist nachstehend anhand der Zeichnung beispielhaft näher erläutert. Diese zeigt in:
- Fig. 1: eine Seitenansicht eines Kraftfahrzeuges mit abgesenktem Hubboden,
- Fig. 2: eine perspektivische Darstellung eines in eine Ausnehmung der Bodengruppe des Fahrzeuges eingebauten Rahmens mit Hubboden,

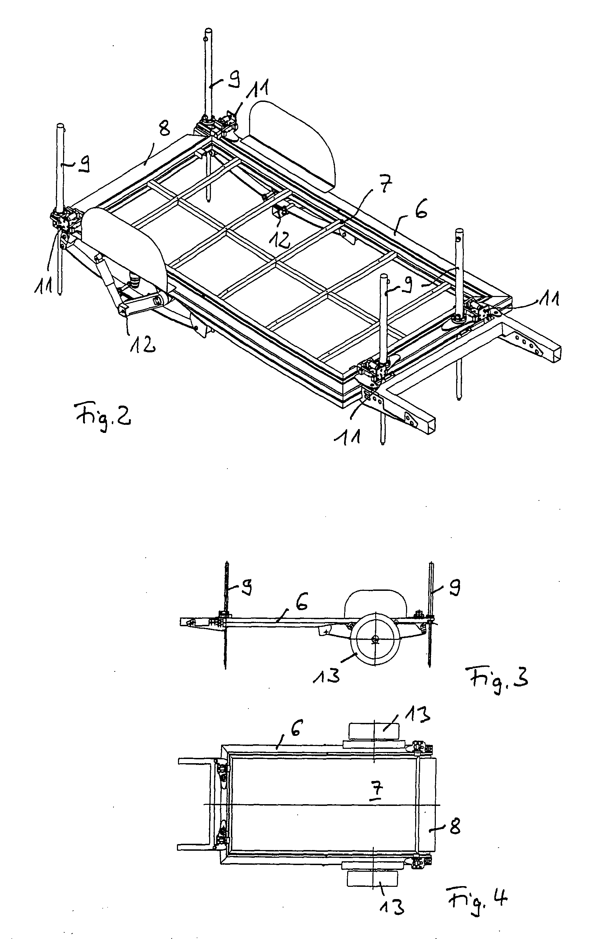

- Fig. 3: eine Seitenansicht der Figur 2 und
- Fig. 4: eine Draufsicht auf Figur 2.

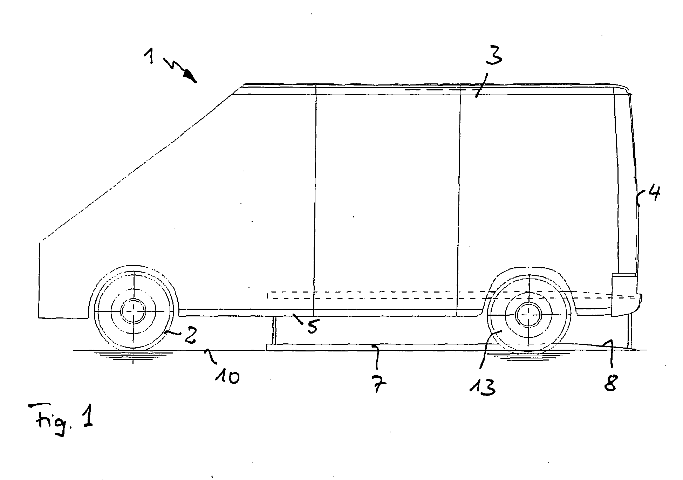

Ein Kraftfahrzeug in Form eines Kastenwagens ist in Figur 1 allgemein mit 1 bezeichnet. Dieser Kastenwagen 1 ist von seinem äußeren Erscheinungsbild her ein beliebiges Serienfahrzeug und weist zwei angetriebene Vorderräder 2 auf, von denen in Figur 1 nur ein Vorderrad 2 zu erkennen ist. Im rückwärtigen Bereich weist der Kastenwagen 1 innerhalb eines kastenförmigen Karosserieaufbaus 3 einen Laderaum auf, der zumindest durch eine rückwärtige Tür 4 zugänglich ist. Diese Tür 4 kann auch als Doppeltür ausgeführt sein, zusätzlich kann auch an der Fahrzeugseite eine weitere, z.B. eine Schiebetür, vorgesehen sein, worauf es im Einzelnen nicht ankommt.

Wesentlich ist nun, dass die in Figur 1 allgemein mit 5 angedeutete Bodengruppe des Kastenwagens 1 im Bereich des Laderaumes mit einer nach hinten offenen, vorzugsweise rechteckförmigen, Ausnehmung versehen ist, d.h. die Bodengruppe 5 ist in diesem Bereich sozusagen aufgeschnitten. Der umlaufende Bereich dieser in den Zeichnungen nicht näher zu erkennenden Ausnehmung ist mit einem nach hinten offenen Rahmen 6 verstärkt, der in geeigneter Weise am Rand der Ausnehmung der Bodengruppe 5 befestigt ist. Dieser Rahmen 6 dient neben der Verstärkung der somit geöffneten Bodengruppe 5 zur Aufnahme eines in vertikaler Richtung verfahrbaren Hubbodens 7, der in den Figuren 1 und 2 nur als Rahmenkonstruktion ohne durchgehende Bodenfläche dargestellt ist. Im hinteren Bereich weist der Hubboden 7 eine Auffahrrampe 8 auf.

Zum vertikalen Verfahren des Hubbodens 7 sind, vorzugsweise in den vier Eckbereichen des Rahmens 6, bevorzugt hydraulische Stellzylinder 9 angeordnet, mittels derer der Hubboden 7 gegenüber dem Rahmen 6 in vertikaler Richtung verfahren werden kann, und zwar bevorzugt nach unten bis auf das Niveau einer in Figur 1 allgemein mit 10 bezeichneten Fahrbahn oder dgl.. Um auf einfache Weise eine synchrone Bewegung sämtlicher hydraulischer Stellzylinder 9 zu verwirklichen, sind diese bevorzugt in Reihe geschaltet und baugleich ausgebildet.

Wenigstens in Transportposition ist der Hubboden 7 am Rahmen 6 verriegelbar, wie dies in Figur 2 dargestellt ist. Dazu sind bevorzugt im Bereich der hydraulischen Stellzylinder 9 entsprechende Verriegelungselemente 11 am Rahmen 6 vorgesehen, die in verriegelter Position in die Rahmenkonstruktion des Hubbodens 7 eingreifen. Damit ist gewährleistet, dass zumindest während der Fahrt des Kastenwagens 1 der Hubboden 7 in der Transportposition fluchtend mit dem Rahmen 6 verriegelt ist.

Der Rahmen 6 weist in seinem hinteren Bereich beidseitig allgemein mit 12 bezeichnete Einzelradaufhängungen auf, an denen jeweils ein Hinterrad 13 aufgehängt ist.

Zur Herstellung eines erfindungsgemäßen Kastenwagens 1 kann ein beliebiger Serienkastenwagen verwendet werden, in dessen Bodengruppe 5 im Bereich des Laderaumes eine Ausnehmung eingebracht wird. In diese Ausnehmung wird nachfolgend der Rahmen 6 mit verstellbarem Hubboden 7 und den weiteren Elementen eingebaut. Dabei ist die Größe (Länge, Breite) der Ausnehmung und somit des Rahmens 6 mit Hubboden 7 frei gestaltbar genauso wie die Dimensionierung zur Realisierung unterschiedlicher Nutzlasten.

## Patentansprüche

1. Kraftfahrzeug mit angetriebenen Vorderrädern und nicht angetriebenen Hinterrädern sowie mit einem rückwärtigen Laderaum mit kastenförmigem Karosserieaufbau auf der Fahrzeugbodengruppe,
**dadurch gekennzeichnet,**
**dass** die Bodengruppe (5) im Bereich des Laderaumes mit einer nach hinten offenen Ausnehmung versehen ist, wobei die Bodengruppe (5) entlang der Ausnehmung mit einem nach hinten offenen Rahmen (6) verstärkt ist, in welchem ein vertikal verfahrbarer Hubboden (7) gelagert ist.

2. Kraftfahrzeug nach Anspruch 1,
**dadurch gekennzeichnet,**
**dass** die Hinterräder (13) einzeln am Rahmen (6) oder an der Bodengruppe (5) aufgehängt sind.

3. Kraftfahrzeug nach Anspruch 1 oder 2,
**dadurch gekennzeichnet,**
**dass** der Hubboden (7) wenigstens in angehobener Transportposition am Rahmen (6) verriegelbar (11) ausgebildet ist.

4. Kraftfahrzeug nach einem oder mehreren der Ansprüche 1 bis 3,
**dadurch gekennzeichnet,**
**dass** der Hubboden (7) hydraulisch verstellbar ausgebildet ist.

5. Kraftfahrzeug nach Anspruch 4,
**dadurch gekennzeichnet,**
**dass** im Bereich aller vier Ecken des rechteckigen Hubbodens (7) ein hydraulischer Stellzylinder (9) angeordnet ist.

6. Kraftfahrzeug nach Anspruch 5,
**dadurch gekennzeichnet,**
**dass** die hydraulischen Stellzylinder (9) in Reihe geschaltet sind.
